# EUROPÄISCHE PATENTSCHRIFT

(11) **EP 1 535 356 B1**
(45) Veröffentlichungstag und Bekanntmachung des Hinweises auf die Patenterteilung: **27.05.2009**
(21) Anmeldenummer: 03790783.9
(22) Anmeldetag: 04.07.2003
(51) Int. Cl.: H01M 2/16

(54) **SEPARATOR-ELEKTRODEN-EINHEIT FÜR LITHIUM-IONEN-BATTERIEN, VERFAHREN ZU DEREN HERSTELLUNG UND VERWENDUNG IN LITHIUM-BATTERIEN**
SEPARATOR-ELECTRODE UNIT FOR LITHIUM-ION BATTERIES, METHOD FOR THE PRODUCTION AND USE THEREOF IN LITHIUM BATTERIES
UNITE SEPARATEUR-ELECTRODES POUR BATTERIES IONS-LITHIUM, PROCEDE D'UTILISATION CORRESPONDANT ET UTILISATION DANS DES BATTERIES AU LITHIUM

(30) Priorität: 24.08.2002 DE 10238943
(43) Veröffentlichungstag der Anmeldung: 01.06.2005
(73) Patentinhaber: Evonik Degussa GmbH, 45128 Essen (DE)
(72) Erfinder: HENNIGE, Volker, 48249 Dülmen (DE); HYING, Christian, 46414 Rhede (DE); HÖRPEL, Gerhard, 48301 Nottuln (DE); AUGUSTIN, Sven, 46282 Dorsten (DE)
(86) Internationale Anmeldenummer: PCT/EP2003/007158
(87) Internationale Veröffentlichungsnummer: WO 2004/021475

(56) Entgegenhaltungen:
- EP-A- 0 766 326
- WO-A-99/15262
- WO-A-03/021697
- US-A- 3 379 570
- US-A- 3 625 771
- US-A- 4 447 376
- US-B1- 6 306 545

## Beschreibung

Die Erfindung betrifft eine Separator-Elektroden-Einheit für Lithium-Ionen-Batterien, ein Verfahren zu deren Herstellung sowie deren Verwendung.

Ein elektrischer Separator ist ein Separator, der in Batterien und anderen Anordnungen, in denen Elektroden, z. B. unter Aufrechterhaltung von Ionenleitfähigkeit, voneinander separiert werden müssen, eingesetzt wird.

Der Separator ist üblicherweise ein dünner, poröser, isolierender Stoff mit hoher Ionendurchlässigkeit, guter mechanischer Festigkeit und Langzeitstabilität gegen die im System, z. B. im Elektrolyten der Batterie, verwendeten Chemikalien und Lösemittel. Er soll in Batterien die Kathode von der Anode elektronisch völlig isolieren aber für den Elektrolyten durchlässig sein. Außerdem muss er dauerelastisch sein und den Bewegungen im System, z. B. im Elektrodenpaket beim Laden und Entladen, folgen.

Der Separator bestimmt maßgeblich die Lebensdauer der Anordnung, in der er verwendet wird, z. B. die von Batterie-Zellen. Die Entwicklung wiederaufladbarer Batterien wird daher durch die Entwicklung geeigneter Separatormaterialien geprägt.

Allgemeine Informationen über elektrische Separatoren und Batterien können z. B. bei J.O. Besenhard in "Handbook of Battery Materials" (VCH-Verlag, Weinheim 1999) nachgelesen werden.

Derzeitig eingesetzte Separatoren bestehen überwiegend aus porösen organischen Polymerfilmen (z. B. EP 0 892 448, EP 0 967 671) bzw. aus anorganischen Vliesstoffen, wie z. B. Vliesen aus Glas- oder Keramik-Materialien oder auch Keramikpapieren. Diese werden von verschiedenen Firmen hergestellt. Wichtige Produzenten sind hier: Celgard, Tonen, Ube, Asahi, Binzer, Mitsubishi, Daramic und andere. Ein typischer organischer Separator besteht z. B. aus Polypropylen oder aus einem Polypropylen/Polyethylen/Polypropylen-Verbund.

Für die Herstellung von Li-Sekundärbatterien werden heute im Allgemeinen Elektroden und Separatoren getrennt gefertigt und erst beim Batteriehersteller zusammengefügt. Dies kann z. B. durch Laminieren bei erhöhtem Druck und Temperatur erfolgen. Einfacher wäre es, den Separator direkt auf eine der beiden Elektroden aufzubringen. Die positive Elektrode (Kathode) besteht meistens aus einer porösen Lithium aufweisenden Verbindung, wie z. B. LiCoO₂ oder LiMnO₂, das eingebunden bzw. verbunden in bzw. durch eine wärmebeständige Polymermatrix, wie z. B. Polyvinylidenfluorid wird. Die negative Elektrode (Anode) besteht häufig aus Graphit, der ebenfalls mit einem Polymer verklebt ist. Das direkte Aufbringen von dünnen, porösen Schichten oder Filmen auf konventionellen Separatormaterialien, wie PP und PE, ist nur schwer möglich.

Es ist deshalb heute üblich Elektrode und Separator durch laminieren zusammenzufügen. Damit dies gelingt werden Separatoren eingesetzt, die ein relativ wärmebeständiges Polymer aufweisen. In EP 1 049 188 wird der Separator beispielsweise dadurch hergestellt, das ein Lithium-Glas-Keramik-Pulver erzeugt wird, welches in einer Lösung von Polyvinylidenfluorid (PVDF) und Hexafluoropropylen in Aceton suspendiert wird und aus dieser Suspension anschließend ein Film erzeugt wird. Der so hergestellte Separator wird auf die positive Elektrode auflaminiert. Auch der in DE 199 18 856 beschriebene Separator wird einzeln hergestellt und anschließend auf die positive Elektrode auflaminiert. Der in DE 199 18 856 beschriebene Separator wird ebenfalls durch Herstellen eines Films aus einer Suspension, die in diesem Fall eine Lösung eines Stickstoff aufweisenden aromatischen Polymers (als sehr hitzebeständiges Polymer) und Keramikpulver aufweist, erhalten.

Darüber hinaus ist aus dem Stand der Technik ebenfalls bekannt die Direktbeschichtung der negativen Elektrode (Graphit) mit einer porösen Polymerschicht (WO 01/91219, WO 01/89022), die als Füllstoff keramische Partikel, wie z. B. TiO₂, SiO₂ oder Al₂O₃ aufweisen kann. Direktbeschichtungen von Elektroden, weder Anode noch Kathode, mit reinen Keramiken sind aus dem Stand der Technik nicht bekannt.

Keramische Separatoren für Li-Ionen-Batterien sind ebenfalls nahezu unbekannt. In WO 99/15262 wird ein Verbundwerkstoff beschrieben, der dadurch hergestellt wird, dass Keramikpartikel auf und in einem porösen Träger gebracht und dort verfestigt werden. Dieser Verbundwerkstoff soll ebenfalls als Separator geeignet sein. Eine direkte Herstellung von Separator-Elektroden-Einheiten wird in der WO 99/15262 nicht beschrieben. Untersuchungen haben außerdem gezeigt, dass mit den dort beschriebenen Materialien und der dort beschriebenen Technik keine Separator-Elektroden-Einheiten herstellbar sind.

EP 0 766 326 A1 offenbart eine elektrochemische Zelle mit einer Separatorschicht, die durch Aufbringen einer keramischen oder glasbildenden Substanz und anschließendes Glühen gebildet wird. Die Separatorschicht wird auf eine anorganische Elektrode, welche frei von organischen Bindern ist, aufgebracht und für eine Zeitdauer von 3 Minuten bis zu einer Stunde bei einer Temperatur von 900° C bis 1100° C geglüht.

Aufgabe der vorliegenden Erfindung war es deshalb ein Verfahren bereitzustellen, mit dem es möglich ist, eine Separator-Elektroden-Einheit durch direkte Herstellung des Separators auf der Elektrode zu erzeugen. Eine solche Separator-Elektroden-Einheit sollte nach Möglichkeit eine Flexibilität aufweisen, wie sie eine durch Laminieren herstellbare Einheit ebenfalls aufweisen kann.

Überraschenderweise wurde gefunden, dass sich durch Aufbringen einer Suspension von Metalloxid-Partikeln, ausgewählt aus Al₂O₃ und ZrO₂ mit einer Partikelgröße größer der Porengröße der zu beschichtenden Elektrode in einem Sol und anschließender Verfestigung zu einer porösen, anorganischen Schicht auf der Elektrode diese mit einem dünnen Separator beschichtet werden kann, der nach der Imprägnierung mit einer Elektrolytlösung oder einem Elektrolytgel eine hervorragende Ionenleitfähigkeit aufweist und außerdem die höchst mögliche Sicherheit gegen Durchbrennen (Melt-Down) zeigt. Eine solche Separator-Elektroden-Einheit kann außerdem eine Flexibilität aufweisen, die der der eingesetzten positiven oder negativen Elektrode entspricht.

Gegenstand der vorliegenden Erfindung ist deshalb eine Separator-Elektroden-Einheit, umfassend eine poröse, als Elektrode, also positive oder negative Elektrode in einer Lithium-Batterie geeignete Elektrode und einer auf dieser Elektrode aufgebrachten Separatorschicht, welche dadurch gekennzeichnet ist, dass die Separator-Elektroden-Einheit eine anorganische Separatorschicht aufweist, die zumindest zwei Fraktionen von Metalloxidpartikeln aufweist, die sich in ihrer mittleren Partikelgröße oder in dem Metall und in ihrer mittleren Partikelgröße voneinander unterscheiden, wobei die Separatorschicht Metalloxid-Partikel mit einer mittleren Partikelgröße (D_{g}) größer als die mittlere Porengröße (d) der Poren der porösen Elektrode aufweist, ausgewählt aus Al₂O₃- und/oder ZrO₂-Partikeln, die durch Metalloxid-Partikel, die eine Partikelgröße (Dₖ) kleiner als die Poren der porösen positiven Elektrode aufweisen, verklebt sind, erhalten durch Erwärmen für 0,5 bis 10 Minuten bei einer Temperatur von 200 bis 280° C, hergestellt aus Suspensionen aus polymeren Solen, wobei zur Anpassung des Benetzungsverhaltens diese Sole Mischungen, die einen oder mehrere Alkohole und aliphatische Kohlenwasserstoffe aufweisen, umfassen.

Außerdem ist Gegenstand der vorliegenden Erfindung ein Verfahren zur Herstellung einer erfindungsgemäßen Separator-Elektroden-Einheit, welches dadurch gekennzeichnet ist, dass auf einer porösen, als positive (Kathode) oder negative (Anode) Elektrode in einer Lithium-Batterie geeigneten Elektrode als Substrat eine poröse anorganische Beschichtung als Separatorschicht, durch Aufbringen einer Suspension, die Metalloxid-Partikel in einem Sol aufweist, und Verfestigen der anorganischen Separatorschicht auf der Elektrode durch zumindest eine thermische Behandlung, erzeugt wird, wobei die Suspension Metalloxid-Partikel mit einer mittleren Partikelgröße (D_{g}) größer als die mittlere Porengröße (d) der Poren der porösen positiven Elektrode aufweist, und ausgewählt aus Al₂O₃- und/oder ZrO₂-Partikeln, und wobei das Sol Metalloxid-Partikel, die eine Partikelgröße (Dₖ) kleiner als die Poren der porösen positiven Elektrode aufweisen, enthält, wobei die thermische Behandlung für 0,5 bis 10 Minuten bei einer Temperatur von 200 bis 280° C durchgeführt wird, und wobei die Suspension hergestellt wird aus polymeren Solen, wobei zur Anpassung des Benetzungsverhaltens diese Sole Mischungen, die einen oder mehrere Alkohole und aliphatische Kohlenwasserstoffe aufweisen, umfassen.

Ebenso ist Gegenstand der vorliegenden Erfindung die Verwendung einer erfindungsgemäßen Separator-Elektroden-Einheit in Lithium-Batterien sowie Lithium-Batterien, die eine erfindungsgemäße Separator-Elektroden-Einheit aufweisen.

Die erfindungsgemäße Separator-Elektroden-Einheit hat den Vorteil, dass sie sehr einfach herzustellen ist. Auf Grund des Herstellungsverfahrens ist außerdem gewährleistet, dass der Separator sehr fest an der Elektrode haftet. Als Separatorschicht wird kein poröses Polymer verwendet sondern eine poröse Keramikschicht. Diese Keramikschicht wird über einen Suspension (Schlicker) auf die Elektrode aufgebracht und dort bei moderaten Temperaturen verfestigt. Dadurch ist es möglich sehr dünne Separatorschichten aufzubringen, die nach der Infiltration mit dem Elektrolyten nur einen sehr geringen Widerstand aufweisen. Diese Separator/Elektroden-Einheit eignet sich somit besonders gut für den Einsatz in Hochleistungs- und Hochenergiebatterien. Die erfindungsgemäße Separator-Elektroden-Einheit weist außerdem eine sehr gute mechanische Stabilität auf und ist insbesondere flexibel. Durch die Verwendung einer porösen keramischen Separatorschicht ist ein Whiskerwachstum im bzw. durch den Separator quasi unmöglich. Außerdem stellt die Keramikschicht einen sehr guten Schutz vor einem mechanischen Kurzschluß der beiden Elektroden dar, wie es ein freitragender Separator nie sein kann. Durch die anorganische, keramische Separatorschicht ist es außerdem unmöglich, dass es zu einem Durchbrennen (melt down) der Batterie bzw. des Separators kommen kann. Die hier beschriebene Separatorschicht in den Separator-Elektroden-Einheiten sind also viel sicherer als alle Polymerseparatoren aber auch sicherer als ein keramischer Separator auf Basis eines Polymervlieses als Träger.

Die Sicherheit spielt in Lithium-Batterien eine sehr wichtige Rolle. Im Gegensatz zu anderen Batterietypen (Pb, NiCd, NiMeH) wird als Lösemittel für den Elektrolyten nicht Wasser sondern ein brennbares Lösemittel, wie z. B. Ethylencarbonat (EC), Propylencarbonat (PC), Dimethylcarbonat (DMC) verwendet, da sich Wasser bei den hohen Potenzialen in der Li-Zelle zersetzen würde. Aus diesem Grund kann und muss der Separator entscheidend zur Sicherheit einer Hochenergie-Batterie beitragen Im Falle einer Überhitzung und Zerstörung der Zelle kann es also bei den Lithiumbatterien zu einem Brand oder Explosion kommen.

Beim Thema Sicherheit muss dabei grundlegend zwischen zwei Gesichtspunkten unterschieden werden:
1 Erwärmung durch Fehlfunktion der Zelle,
2 Äußere Erwärmung.

Der erstere Fall kann z. B. dann auftreten, wenn es beim Betrieb der Batterie zu einem inneren Kurzschluss kommt. Die Batterie kann sich dann in einer gefährlichen Reaktion sehr schnell selbst entladen. Hierbei treten dann so große elektrische Ströme auf, dass eine geschlossene Batteriezelle im ungünstigsten Fall sogar explodieren kann.

Polymerseparatoren bringen beispielsweise die für Lithium-Batterien zur Zeit geforderte Sicherheit, indem sie ab einer bestimmten Temperatur (der Shut-Down-Temperatur, die bei ca. 120 °C liegt) jeglichen Stromtransport durch den Elektrolyten unterbinden. Dies geschieht dadurch, dass bei dieser Temperatur das Porengefüge des Separators zusammenbricht und alle Poren verschlossen werden. Dadurch, dass keine Ionen mehr transportiert werden können, kommt die gefährliche Reaktion die zur Explosion führen kann zum erliegen.

Im zweiten Fall wird die Zelle aufgrund äußerer Umstände aber weiter erwärmt, so wird bei ca. 150 °C die melt down -Temperatur überschritten. Ab dieser Temperatur kommt es zum Schmelzen des Separators, der ja üblicherweise aus PP besteht, wobei dieser sich zusammenzieht. An vielen Stellen in der Batteriezelle kommt es nun zu einem direkten Kontakt zwischen den beiden Elektroden und somit zu einem großflächigem inneren Kurzschluss. Dieser führt zur unkontrollierten Reaktion die mit einer Explosion der Zelle endet, bzw. der entstehende Druck wird durch ein Überdruckventil (eine Berstscheibe) häufig unter Feuererscheinungen abgebaut.

Bei der erfindungsgemäßen Separator-Elektroden-Einheit mit einer anorganischen Separatorschicht kann es zum sogenannten Melt-Down nicht kommen, da die hitzebeständigen anorganischen Partikel dafür sorgen, dass der Separator nicht schmelzen wird. Somit ist sichergestellt, dass es keine Betriebszustände gibt, in denen ein großflächiger Kurzschluss entstehen kann. Selbst bei einem äußeren Brand, der die Zelle auf über 200 °C aufheizt, erfüllt der keramische Separator weiterhin seine Funktion.

Falls ein Abschaltmechanismus (Shut down-Mechanismus) gewünscht wird, kann dies auf einfache Weise dadurch erreicht werden, das die Oberfläche der Separatorschicht mit Partikel eines Stoffs beschichtet werden, die beim Erreichen einer bestimmten Temperatur schmelzen und so die Poren der Separatorschicht verschließen und so ein weiterer Ionenfluss verhindert wird. Dies kann Beispielweise durch eine zusätzlich aufgebrachte Polymer- oder Wachsschicht erreicht werden, deren Schmelzpunkt im gewünschten Bereich liegt.

Auch bei einem inneren Kurzschluss, der z. B. durch einen Unfall verursacht wurde, ist die erfindungsgemäße Separator-Elektroden-Einheit sehr sicher. Würde sich z. B. ein Nagel durch eine Batterie bohren, geschieht je nach Separator folgendes: Ein Polymerseparator würde an der Durchdringungsstelle (Ein Kurzschlussstrom fließt über den Nagel und heizt diesen auf) schmelzen und sich zusammenziehen. Dadurch wird die Kurzschlussstelle immer größer und die Reaktion gerät außer Kontrolle. Bei der erfindungsgemäßen Separatorschicht mit Abschaltmechanismus schmilzt zwar das polymere Material der Abschaltschicht, nicht aber die anorganische Separatorschicht. Somit läuft die Reaktion im Inneren der Batteriezelle nach einem solchen Unfall sehr viel moderater ab. Diese Batterie ist somit deutlich sicherer als eine mit einem Polymerseparator ausgerüstete Batterie, weshalb Batterien mit erfindungsgemäßen Separator-Elektroden-Einheiten insbesondere im mobilen Bereich eingesetzt werden können, wo die Gefahr von Unfällen deutlich größer ist als im stationären oder portablen Bereich.

Durch die einfache Art der Herstellung der erfindungsgemäßen Separator-Elektroden-Einheit besitzt diese außerdem einen deutlichen Preisvorteil gegenüber Einheiten, die auf herkömmliche Weise hergestellt werden, da dabei ein zusätzlicher Verfahrensschritt, nämlich das Verbinden von Separator und Elektrode durchgeführt werden muss.

Durch die Verwendung von in ihrer Partikelgröße genau abgestimmten Metalloxid-Partikeln zur Herstellung der porösen keramischen Separatorschicht wird eine besonders hohe Porosität der fertigen Separatorschicht erreicht, wobei die Porosität immer noch genügend klein ist, um ein Durchwachsen von Lithium-Whiskem durch den Separator zu verhindern. Um hier eine ideale Porengröße bzw. Porosität des Separators zu erreichen hat es sich als besonders vorteilhaft erwiesen, die eingesetzten Metalloxidpartikel vor dem Suspendieren durch Windsichten oder Hydroklassieren zu klassieren, um möglichst gleichgroße Metalloxid-Partikel einsetzen zu können, da bei handelsüblichen Metalloxid-Partikeln während Herstellung, Lagerung und/oder Transport häufig ein nicht unbeträchtlicher Anteil an Partikeln vorliegt, die deutlich kleiner (z. B. Bruch oder ähnliches) oder aber auch deutlich größer (z. B. Aggregate, Agglomerate) sind. Das Vorliegen einer großen Anzahl kleinerer Partikel führt aber dazu, dass die Poren der Separatorschicht oder sogar die Poren der Elektrode teilweise durch diese kleinen Partikel verkleinert oder ganz verschlossen werden. Die ideale Porengröße bzw. Porosität des Separators ist dann nicht immer zu erreichen.

Auf Grund der hohen Porosität in Verbindung mit der geringen Dicke der Separatorschicht und der sehr guten Benetzbarkeit der hydrophilen Keramikschicht mit polaren Lösemitteln ist es außerdem möglich den Separator vollständig oder zumindest nahezu vollständig mit dem Elektrolyten zu tränken, so dass keine Toträume in einzelnen Bereichen des Separators und damit in bestimmten Wicklungen der Batteriezellen entstehen können, in denen kein Elektrolyt vorliegt. Dies wird insbesondere dadurch erreicht, dass durch die Einhaltung der Partikelgröße der Metalloxid-Partikel die erhaltenen Separatoren frei bzw. nahezu frei von geschlossenen Poren sind, in welche der Elektrolyt nicht eindringen kann. Auf Grund der geringen Dicke und der hohen Porosität der Separatorschicht ist die Separator-Elektroden-Einheit insbesondere für den Einsatz in Lithium-Hochenergie- bzw. Hochleistungsbatterien geeignet.

Die erfindungsgemäße Separator-Elektroden-Einheit und ein Verfahren zu ihrer Herstellung wird im Folgenden beschrieben, ohne dass die Erfindung auf diese Ausführungsarten beschränkt sein soll.

Die erfindungsgemäße Separator-Elektroden-Einheit, umfassend eine poröse, als positive Elektrode in einer Lithium-Batterie geeignete Elektrode und einer auf dieser Elektrode aufgebrachten Separatorschicht, zeichnet sich dadurch aus, dass sie eine anorganische Separatorschicht aufweist, die zumindest zwei Fraktionen von Metalloxidpartikeln aufweist, die sich in ihrer mittleren Partikelgröße, vorzugsweise um mehr als den Faktor 10 und/oder in dem Metall voneinander unterscheiden. Die zwei Partikelfraktionen weisen Metalloxidpartikel auf, die sich in ihrer mittleren Partikelgröße oder in dem Metall und in ihrer mittleren Partikelgröße voneinander unterscheiden. Die anorganische Separatorschicht kann neben den anorganischen Bestandteilen geringe Mengen an organischen, insbesondere siliziumorganischen Verbindungen aufweisen. Der Anteil dieser organischen Bestandteile an der anorganischen Separatorschicht beträgt aber vorzugsweise weniger als 5 Gew.-%, besonders bevorzugt weniger 1 Gew.-% und besonders bevorzugt weniger als 0,1 Gew.-%. Diese Silane dienen als Haftvermittler, um eine bessere Anbindung der Keramik an die Elektroden zu erzielen.

Die zwei Partikelfraktionen in der Separatorschicht weisen, unabhängig davon ob sie als Metalloxid Oxide gleicher oder unterschiedlicher Metalle aufweisen, bevorzugt Partikel auf, deren Partikelgrößen sich um zumindest den Faktor 10 und besonders bevorzugt um zumindest den Faktor 100 unterscheiden. Die Dicke (z) der Separatorschicht beträgt vorzugsweise von kleiner 100 D_{g} und größer gleich 1,5 D_{g} und besonders bevorzugt von kleiner 20 D_{g} und größer gleich 5 D_{g}.

Die Metalloxid-Partikel mit einer mittleren Partikelgröße (D_{g}) größer als die mittlere Porengröße (d) der Poren der porösen positiven Elektrode sind Al₂O₃- und/oder ZrO₂-Partikel. Die Metalloxid-Partikel mit einer mittleren Partikelgröße (Dₖ) kleiner als die mittlere Porengröße (d) der Poren der porösen positiven Elektrode sind vorzugsweise SiO₂- und/oder ZrO₂-Partikel.

Bevorzugt weisen die erfindungsgemäßen Separator-Elektroden-Einheiten Metalloxid-Partikel mit einer mittleren Partikelgröße (D_{g}) größer als die mittlere Porengröße (d) der Poren der porösen positiven Elektrode eine mittlere Partikelgröße (D_{g}) von kleiner 10 µm, besonders vorzugsweise von kleiner 5 µm und ganz besonders bevorzugt von kleiner 3 µm auf. Bei einer Dicke der Separatorschicht von 5 D_{g} ergibt sich damit für Partikel mit einer mittleren Partikelgröße von 3 µm eine Dicke der Separatorschicht von etwa max. 15 µm. Bevorzugte Schichtdicken der Separatorschicht weisen Dicken kleiner 25 µm, vorzugsweise von 10 bis 15 µm auf. Wenn notwendig kann die Dicke der Separatorschicht aber auch kleiner 10 µm betragen. Die Auftragsgewichte betragen vorzugsweise von 10 bis 200 g/m², bevorzugt kleiner 100 g/m² und ganz besonders bevorzugt kleiner 50 g/m².

Die Separatorschicht der erfindungsgemäßen Separator-Elektroden-Einheit weist vorzugsweise eine Porosität von 30 bis 70 % (mittels Quecksilber-Porosimetrie bestimmt) auf. Durch die hohe Porosität, die gute Benetzbarkeit und die geringe Dicke der Separatorschicht lässt sich die Separatorschicht gut mit Elektrolyten imprägnieren bzw. befüllen, weshalb die Separatorschicht eine relativ hohe Ionenleitfähigkeit zeigt. Durch die geringe Dicke wird ein besonders geringer elektrischer Widerstand des Separators in der Anwendung mit einem Elektrolyten erzielt. Die Separator-Elektroden-Einheit eignet sich deshalb besonders gut für Hochleistungsbatterien. Der Separator selbst weist natürlich einen sehr hohen elektrischen Widerstand auf, da er selbst isolierende Eigenschaften aufweisen muss. Zudem erlauben dünnere Separatoren eine erhöhte Packungsdichte in einem Batteriestapel, so dass man im gleichen Volumen eine größere Energiemenge speichern kann. Die Separator-Elektroden-Einheit eignet sich deshalb besonders gut für Hochenergiebatterien.

Die mechanische Eigenschaften der Separator-Elektroden-Einheit werden aufgrund der geringen Dicke der Separatorschicht im wesentlichen von der Elektrode bestimmt. Typische Zugfestigkeiten liegen im Bereich der Zugfestigkeiten des für die Herstellung verwendeten metallischen Trägers. Bei Streckmetallen liegt diese, je nach verwendetem Streckmetalle, bei ca. 10N/cm und höher und bei Verwendung von Metallfolien bei größer 15 N/cm. Die Separator-Elektroden-Einheit kann flexibel ausgeführt sein. Vorzugsweise lässt sich eine erfindungsgemäße Separator-Elektroden-Einheit bis auf einen Radius bis herab zu 100 m, vorzugsweise bis herab zu 50 cm und besonders bevorzugt bis herab zu 5, 4, 3, 2 oder 1 mm biegen.

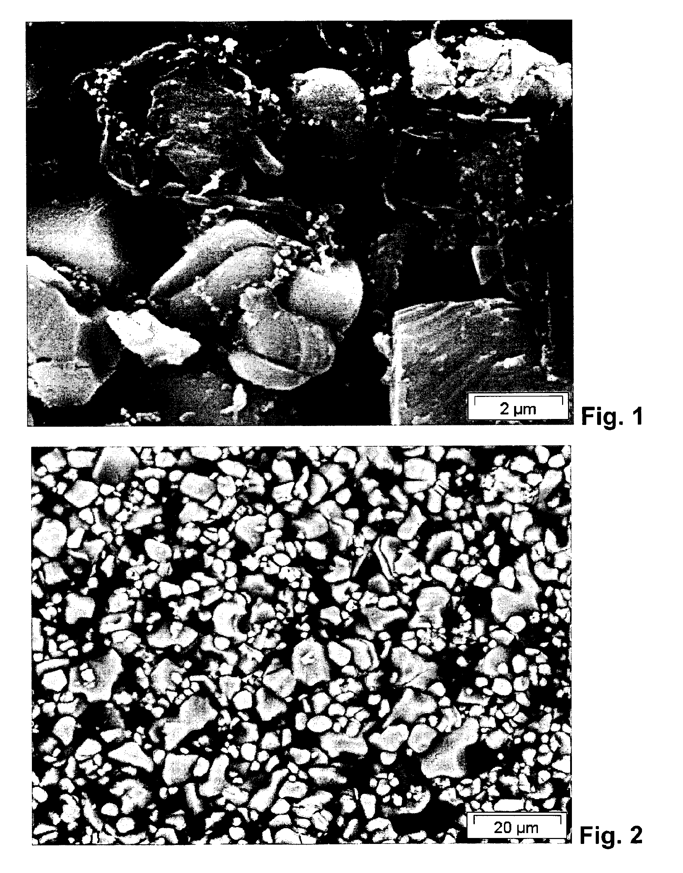

Als positive Elektrode kann die erfindungsgemäße Separator-Elektroden-Einheit jede herkömmliche Elektrode aufweisen. Vorzugsweise weist die erfindungsgemäße Separator-Elektroden-Einheit als Elektrode eine Elektrode auf, die lithiumhaltige Verbindungen, insbesondere lithiumhaltige anorganische Verbindungen, wie z. B. LiCoO₂, LiMnO₂, Lithiumeisenphosphate oder ähnliche Mischoxide aufweist. Üblicherweise werden aus diesen Verbindungen in Kombination mit Graphit oder Russ, einem möglichst temperaturstabilen Polymer, wie z. B. Polyvinylidenfluorid, Polyacryl oder Polystyrol, und einem Lösemittel Pasten erzeugt, die auf einer dünnen Metallfolie, wie z. B. Aluminiumfolie, aufgebracht und durch Entfernen des Lösemittels verfestigt werden. Bevorzugte Elektroden weisen eine möglichst hohe Porosität, vorzugsweise im Bereich von 20 bis 40 % (bestimmt mittels Hg-Porosimetrie) auf, um eine möglichst große aktive Oberfläche bereitzustellen. Besonders bevorzugte Elektroden weisen mittlere Porengrößen (d) von 0,5 bis 20 µm, vorzugsweise von 5 bis 10 µm auf. Die Metallfolie kann entweder einfach oder vorzugsweise auch beidseitig beschichtet sein. Beidseitig beschichtete positive Elektroden haben vorzugsweise eine Dicke von 160 - 200 µm und ein Flächengewicht von 550 - 700 g/m². Fig. 1 zeigt ein elektronenmikroskopisches Bild einer typischen Kathode. Die genannten Werte können aber auch deutlich abweichen, je nachdem was der Batteriekunde fordert.

Als negative Elektrode kann die erfindungsgemäße Separator-Elektroden-Einheit ebenfalls jede herkömmliche Elektrode aufweisen. Vorzugsweise weist die erfindungsgemäße Separator-Elektroden-Einheit als Elektrode eine Elektrode auf, die elektrisch leitfähige Kohlenstoff-Verbindungen, wie z. B. natürliche oder künstliche Graphite, Russ oder ähnliches aufweist. Üblicherweise werden aus diesen Verbindungen mit einem möglichst temperaturstabilen Polymer, wie z. B. Polyvinylidenfluorid, Polyacryl oder Polystyrol, und einem Lösemittel Pasten erzeugt, die auf einer dünnen Metallfolie, wie z. B. Kupferfolie, aufgebracht und durch Entfernen des Lösemittels verfestigt werden. Bevorzugte Elektroden weisen eine möglichst hohe Porosität, vorzugsweise im Bereich von 20 bis 40 % (bestimmt mittels Hg-Porosimetrie) auf, um eine möglichst große aktive Oberfläche bereitzustellen. Besonders bevorzugte Elektroden weisen mittlere Porengrößen (d) von 0,5 bis 20 µm, vorzugsweise von 5 bis 10 µm auf. Die Metallfolie kann entweder einfach oder vorzugsweise auch beidseitig beschichtet sein. Beidseitig beschichtete negative Elektroden haben vorzugsweise eine Dicke von 200 - 250 µm und ein Flächengewicht von 350 - 450 g/m². Die genannten Werte können aber ebenfalls auch deutlich abweichen, je nachdem was der Batteriekunde fordert.

Bei beiden Elektroden kann im Falle beidseitig beschichteter Stromsammler die Separatorschicht auf einer oder beiden Seiten aufgebracht sein, je nachdem was für den Batteriekunden wünschenswert für dessen Prozess ist.

Damit die erfindungsgemäße Separator-Elektroden-Einheit über einen Abschaltmechanismus (Shut-Down-Mechanismus) verfügt kann es vorteilhaft sein, wenn die Separatorschicht eine Beschichtung mit Partikeln, die bei einer gewünschten Abschalttemperatur schmelzen, sogenannte Abschaltpartikel, vorzugsweise Wachs- oder Polymerpartikeln aufweist. Besonders bevorzugte Materialien, aus denen die Abschaltpartikel bestehen können sind beispielweise natürliche oder künstliche Wachse, niedrigschmelzende Polymere, wie z. B. Polyolefine, wobei das Material der Abschaltpartikel so ausgewählt wird, das die Partikel bei der gewünschten Abschalttemperatur aufschmelzen und die Poren des Separators verschließen, so dass ein weiterer Ionenfluss verhindert wird.

Die Beschichtung mit Abschaltpartikeln kann auf der Separatorschicht und/oder zwischen der Separatorschicht und der Elektrode vorhanden sein. Je nach gewünschter Abschalttemperatur ist es aber bevorzugt, wenn die Beschichtung mit Abschaltpartikeln auf der Separatorschicht aufgebracht ist. Dies ist unter anderem durch die Art der Herstellung der Abschaltpartikelbeschichtung vorgegeben. Eine Beschichtung zwischen der Separatorschicht und der Elektrode müsste so erfolgen, dass die Abschaltpartikelschicht auf die Elektrode aufgebracht wird und anschließend die Separatorschicht aufgebracht wird und ist deshalb nur dann möglich, wenn die Abschalttemperatur und damit der Schmelzpunkt des als Abschaltpartikel verwendeten Materials, beispielsweise natürliches oder künstliches Wachs, niedrigschmelzende Polymere, wie z. B. Polyolefine, über der Temperatur liegt, die bei der Verfestigung der Separatorschicht angewendet werden muss.

Vorzugsweise weisen die Abschaltpartikel eine mittlere Partikelgröße (D_{w}) auf, die größer oder gleich der mittleren Porengröße (dₛ) der Poren der Separatorschicht ist und, falls sich die Abschaltschicht zwischen Separator und Elektrode befindet, ebenfalls größer als die mittlere Porengröße (d) der Poren der porösen Elektrode ist. Dies ist insbesondere deshalb vorteilhaft, weil so ein Eindringen und Verschließen der Poren der Elektroden oder der Separatorschicht, das eine Reduktion des Porenvolumens und damit der Leitfähigkeit des Separators und auch der Leistungsfähigkeit der Batterie zur Folge hätte, verhindert wird. Die Dicke der Abschaltpartikelschicht ist nur in sofern kritisch, als das eine zu dicke Schicht den Widerstand in dem Batteriesystem unnötig erhöhen würde. Um eine sichere Abschaltung zu erzielen, sollte die Abschaltpartikelschicht eine Dicke (z_{w}) aufweisen, die von ungefähr gleich der mittleren Partikelgröße der Abschaltpartikel (D_{w}) bis zu 10 D_{w}, vorzugsweise von 2 D_{w} bis D_{w} beträgt.

Die gesamte Dicke der Separator-Elektroden-Einheit (ohne die zusätzliche Abschaltpartikelschicht) ist stark abhängig von der Dicke der Elektrode. Typischerweise ist die Dicke im Falle beidseitig beschichteter Elektroden kleiner 350 µm, bevorzugt kleiner 250 µm und ganz besonders bevorzugt kleiner 200 µm, bei gleichzeitig konstanter Kapazität der Zelle.

Die erfindungsgemäßen Separator-Elektroden-Einheiten werden durch ein Verfahren zur Herstellung von Separator-Elektroden-Einheiten hergestellt, welches sich dadurch auszeichnet, dass auf einer porösen, als positive (Kathode) oder negative (Anode) Elektrode in einer Lithium-Batterie geeigneten Elektrode als Substrat eine poröse anorganische Beschichtung als Separatorschicht, durch Aufbringen einer Suspension, die Metalloxid-Partikel in einem Sol aufweist, und Verfestigen der anorganischen Separatorschicht auf der Elektrode durch zumindest eine thermische Behandlung, erzeugt wird, wobei die Suspension Metalloxid-Partikel mit einer mittleren Partikelgröße (D_{g}) größer als die mittlere Porengröße (d) der Poren der porösen positiven Elektrode aufweist, und ausgewählt aus Al₂O₃- und/oder ZrO₂-Partikeln, und wobei das Sol Metalloxid-Partikel, die eine Partikelgröße (Dₖ) kleiner als die Poren der porösen positiven Elektrode aufweisen, enthält, wobei die thermische Behandlung für 0,5 bis 10 Minuten bei einer Temperatur von 200 bis 280° C durchgeführt wird, und wobei die Suspension hergestellt wird aus polymeren Solen, wobei zur Anpassung des Benetzungsverhaltens diese Sole Mischungen, die einen oder mehrere Alkohole und aliphatische Kohlenwasserstoffe aufweisen, umfassen.

Als Substrat kann jede herkömmliche Elektrode, die als positive Elektrode in einer Lithium-Batterie geeignet ist, eingesetzt werden. Vorzugsweise werden als Substrat solche Elektroden eingesetzt, die lithiumhaltige Verbindungen, insbesondere lithiumhaltige anorganische Verbindungen, wie z. B. LiCoO₂, LiMnO₂, Lithiumeisenphosphate oder ähnliche Mischoxide aufweisen. Üblicherweise werden aus diesen Verbindungen in Kombination mit Graphit oder Russ, einem möglichst temperaturstabilen Polymer, wie z. B. Polyvinylidenfluorid, Polyacryl oder Polystyrol, und einem Lösemittel Pasten erzeugt, die auf einer dünnen Metallfolie, wie z. B. Aluminiumfolie, aufgebracht und durch Entfernen des Lösemittels verfestigt werden. Bevorzugte Elektroden weisen eine möglichst hohe Porosität, vorzugsweise im Bereich von 20 bis 40 % (bestimmt mittels Hg-Porosimetrie) auf, um eine möglichst große aktive Oberfläche bereitzustellen. Besonders bevorzugte Elektroden weisen mittlere Porengrößen (d) von 0,5 bis 20 µm, vorzugsweise von 5 bis 10 µm auf. Die Metallfolie kann entweder einfach oder vorzugsweise auch beidseitig beschichtet sein. Als Substrat einzusetzende beidseitig beschichtete positive Elektroden haben vorzugsweise eine Dicke von 160 bis 200 µm und ein Flächengewicht von 550 bis 700 g/m².

Als Substrat kann ebenfalls jede herkömmliche Elektrode, die als negative Elektrode in einer Lithium-Batterie geeignet ist, eingesetzt werden. Vorzugsweise werden als Substrat solche Elektroden eingesetzt, die elektrisch leitfähige Kohlenstoff-Verbindungen, wie z. B. natürliche oder künstliche Graphite, Russ oder ähnliches aufweisen. Üblicherweise werden aus diesen Verbindungen mit einem möglichst temperaturstabilen Polymer, wie z. B. Polyvinylidenfluorid, Polyacryl oder Polystyrol, und einem Lösemittel Pasten erzeugt, die auf einer dünnen Metallfolie, wie z. B. Kupferfolie, aufgebracht und durch Entfernen des Lösemittels verfestigt werden. Bevorzugte Elektroden weisen eine möglichst hohe Porosität, vorzugsweise im Bereich von 20 bis 40 % (bestimmt mittels Hg-Porosimetrie) auf, um eine möglichst große aktive Oberfläche bereitzustellen. Besonders bevorzugte Elektroden weisen mittlere Porengrößen (d) von 0,5 bis 20 µm, vorzugsweise von 5 bis 10 µm auf. Die Metallfolie kann entweder einfach oder vorzugsweise auch beidseitig beschichtet sein. Als Substrat einsetzbare beidseitig beschichtete negative Elektroden haben vorzugsweise eine Dicke von 200 bis 250 µm und ein Flächengewicht von 350 bis 450 g/m².

Die erfindungsgemäße verwendete Suspension weist Metalloxid-Partikel mit einer mittleren Partikelgröße (D_{g}) größer als die mittlere Porengröße (d) der Poren der porösen positiven Elektrode auf. Als Metalloxid-Partikel oder als Metalloxid-Partikel mit einer mittleren Partikelgröße (D_{g}) größer als die mittlere Porengröße (d) der Poren der porösen positiven Elektrode werden zur Herstellung der Suspension Al₂O₃- und/oder ZrO₂ -Partikel eingesetzt. Bevorzugt weisen die als Metalloxid-Partikel eingesetzten Partikel eine mittlere Partikelgröße von kleiner 10 µm, vorzugsweise von kleiner 5 µm und ganz besonders bevorzugt von kleiner 3 µm auf.

Es hat sich herausgestellt, dass der Einsatz von handelsüblichen Metalloxidpartikeln unter Umständen zu unbefriedigenden Ergebnissen führt, da häufig eine sehr große Korngrößenverteilung vorliegt. Es werden deshalb bevorzugt Metalloxidpartikel eingesetzt, die durch ein herkömmliches Verfahren, wie z. B. Windsichten oder Hydroklassieren, klassiert wurden. Durch diese Maßnahme wird erreicht, dass die anorganische poröse Separatorschicht eine sehr gleichmäßige Porengrößenverteilung aufweist.

Die Suspension kann z. B. durch Aufdrucken, Aufpressen, Einpressen, Aufrollen, Aufrakeln, Aufstreichen, Tauchen, Spritzen oder Aufgießen auf das Substrat aufgebracht werden. Vorzugsweise wird eine Suspension eingesetzt, bei der das Gewichtsverhältnis von Metalloxidpartikeln zu Sol von 1 zu 1000 bis 2 zu 1, vorzugsweise von 1 zu 100 bis 1 zu 5 und besonders bevorzugt von 1 zu 4 bis 1 zu 1 beträgt.

Die zur Herstellung der Beschichtung verwendete Suspension weist zumindest ein anorganisches Oxid des Aluminiums und/oder Zirkoniums und zumindest ein Sol, der Elemente Al und Zr auf, und wird durch Suspendieren von Partikeln zumindest eines Oxids in zumindest einem dieser Sole hergestellt.

Die Sole werden durch Hydrolisieren zumindest einer Verbindung der Elemente Zr, Al erhalten. Es kann vorteilhaft sein, die zu hydrolysierende Verbindung vor der Hydrolyse in Alkohol oder eine Säure oder eine Kombination dieser Flüssigkeiten zu geben. Als zu hydrolysierende Verbindung wird vorzugsweise zumindest ein Nitrat, ein Chlorid, ein Carbonat oder eine Alkoholatverbindung der Elemente Zr und/oder Al hydrolisiert. Die Hydrolyse erfolgt vorzugsweise in Gegenwart von Wasser, Wasserdampf, Eis, oder einer Säure oder eine Kombination dieser Verbindungen.

In einer Ausführungsvariante des erfindungsgemäßen Verfahrens werden durch Hydrolyse der zu hydrolisierenden Verbindungen polymere Sole hergestellt. Diese polymeren Sole zeichnen sich dadurch aus, dass die in dem Sol durch Hydrolyse entstandenen Verbindungen polymer (also kettenförmig über einen größeren Raum vernetzt) vorliegen. Die polymeren Sole weisen üblicherweise weniger als 50 Gew.-%, vorzugsweise sehr viel weniger als 20 Gew.-% an Wasser und/oder wässriger Säure auf. Um auf den bevorzugten Anteil von Wasser und/oder wässriger Säure zu kommen wird die Hydrolyse vorzugsweise so durchgeführt, dass die zu hydrolisierende Verbindung mit dem 0,5 bis 10fachen Molverhältnis und bevorzugt mit dem halben Molverhältnis Wasser, Wasserdampf oder Eis, bezogen auf die hydrolisierbare Gruppe, der hydrolisierbaren Verbindung, hydrolisiert wird. Eine bis zu 10fache Menge an Wasser kann bei sehr langsam hydrolisierenden Verbindungen wie z. B. beim Tetraethoxysilan eingesetzt werden. Sehr schnell hydrolisierende Verbindungen wie das Zirkontetraethylat können unter diesen Bedingungen durchaus schon partikuläre Sole bilden, weshalb zur Hydrolyse solcher Verbindungen bevorzugt die 0,5fache Menge an Wasser eingesetzt wird. Eine Hydrolyse mit weniger als der bevorzugten Menge an Wasser, Wasserdampf, oder Eis führt ebenfalls zu guten Ergebnissen. Wobei ein Unterschreiten der bevorzugten Menge von einem halben Molverhältnis um mehr als 50% möglich aber nicht sehr sinnvoll ist, da beim Unterschreiten dieses Wertes die Hydrolyse nicht mehr vollständig ist und Beschichtungen auf Basis solcher Sole nicht sehr stabil sind.

Zur Herstellung dieser Sole mit dem gewünschten sehr geringen Anteil an Wasser und/oder Säure im Sol kann es vorteilhaft sein, wenn die zu hydrolisierende Verbindung in einem organischen Lösemittel, insbesondere Ethanol, Isopropanol, Butanol, Amylalkohol, Hexan, Cyclohexan, Ethylacetat und oder Mischungen dieser Verbindungen gelöst wird, bevor die eigentliche Hydrolyse vorgenommen wird. Ein so hergestelltes Sol kann zur Herstellung der erfindungsgemäßen Suspension oder als Haftvermittler in einem Vorbehandlungsschritt eingesetzt werden.

Die polymeren Sole werden als Sol in dem erfindungsgemäßen Verfahren zur Herstellung der Suspension eingesetzt. Das Verfahren der Herstellung von Separatoren durch Aufbringen und Verfestigen einer Suspension auf einem Substrat an und für sich ist aus DE 101 42 622 und in ähnlicher Form aus WO 99/15262 bekannt, jedoch lassen sich nicht alle Parameter bzw. Einsatzstoffe, auf die Herstellung der erfindungsgemäßen Membran übertragen. Der Prozess, der in WO 99/15262 beschrieben wird, ist in dieser Form insbesondere nicht auf die Herstellung von Separator-Elektroden-Einheiten und Elektroden als Substrat übertragbar, da bei dem in WO 99/15262 beschriebenen Verfahren eine Beschichtung in und auf dem Substrat erfolgen sollte, was bei dem vorliegenden Verfahren ausdrücklich verhindert werden muss, um ein Verschließen oder Verkleinern der Poren der Elektroden zu verhindern. Zu dem lassen sich durch die in WO 99/15262 beschriebenen sehr wasserhaltigen Solsysteme, häufig keine durchgängige Benetzungen der üblicherweise hydrophoben Elektroden ermöglichen, da die sehr wasserhaltigen Solsysteme die häufig Polyvinylidenfluorid als Binder aufweisenden Elektroden unter Umständen nicht oder nur schlecht benetzen. Es wurde festgestellt, dass selbst kleinste unbenetzte Stellen an der Oberfläche der Elektrode dazu führen können, dass Separatorschichten erhalten werden, die Fehler (wie z. B. Löcher oder Risse) aufweisen und damit unbrauchbar sind.

Es wurde nun gefunden, dass ein Solsystem bzw. eine Suspension, welches bzw. welche im Benetzungsverhalten der Oberfläche der Elektrode angepasst wurde, die Oberfläche vollständig benetzt und somit fehlerfreie Beschichtungen erhältlich sind. Bei dem erfindungsgemäßen Verfahren erfolgt deshalb eine Anpassung des Benetzungsverhaltens des Sols bzw. der Suspension. Diese Anpassung erfolgt erfindungsgemäß durch die Herstellung von polymeren Solen bzw. Suspensionen aus polymeren Solen, wobei diese Sole einen oder mehrere Alkohole, wie z. B. Methanol, Ethanol oder Propanol oder Mischungen dieser Alkohole, und aliphatische Kohlenwasserstoffe aufweisen, umfassen. Es sind aber auch andere Lösemittelgemische denkbar, die dem Sol bzw. der Suspension zugegeben werden können, um diese im Benetzungsverhalten an die Oberfläche der verwendeten Elektrode anzupassen.

Es wurde festgestellt, dass die grundlegende Änderung des Solsystems und der daraus resultierenden Suspension zu einer deutlichen Verbesserung der Haftungseigenschaften der keramischen Komponenten auf dem Oberflächenmaterial der Elektrode führt. Solche guten Haftfestigkeiten sind mit partikulären Solsystemen normalerweise nicht erhältlich. Vorzugsweise werden deshalb Elektroden, die hydrophobe Polymere an der Oberfläche aufweisen, mittels Suspensionen beschichtet, die auf polymeren Solen basieren oder in einem vorgeschalteten Schritt durch Behandlung mit einem polymeren Sol mit einem Haftvermittler ausgerüstet wurden.

Die Sole oder Suspensionen können die Haftvermittler aber auch selbst enthalten, so dass die gute Anbindung bei der Beschichtung direkt erfolgt. Gute Haftvermittler müssen dem Elektrodenmaterial angepasst werden und stammen aus der Reihe der Alkyltrialkoxyysilane. Für PVDF eignet sich etwa Triethoxy(tridecafluorooctyl)silan sehr gut. Der Gehalt an Haftvermittler beträgt vorzugsweise von 0,1 bis 20 Gew.-% und ganz besonders bevorzugt von 1 bis 5 Gew-% im Sol oder der Suspension.

Je nach der Art der verwendeten Suspension kann es notwendig sein, die Viskosität der Suspension einzustellen. Dies ist insbesondere dann notwendig, wenn eine Suspension eingesetzt wird, die Partikel aufweist, die kleiner als die mittlere Porenweite der Poren der Elektrode sind. Durch Einstellen einer entsprechend hohen Viskosität der Suspension wird in Abwesenheit äußerer Scherkräfte ein Eindringen der Suspension in die Poren der Elektrode verhindert (Strukturviskosität, nicht-newtonsches Verhalten). Ein solches Verhalten lässt sich durch Zugabe von Hilfsstoffen erzielen, die das Fließverhalten beeinflussen. Zur Einstellung der Viskosität der Suspension werden als Hilfsstoffe ebenfalls bevorzugt anorganische Materialien verwendet. Besonders bevorzugt werden der Suspension zur Einstellung der Viskosität der Suspension pyrogene Kieselsäuren, wie z. B. Aerosile der Degussa AG, wie z. B. Aerosil 200, zugegeben. Da diese Substanzen als Hilfsstoffe zur Einstellung der Viskosität sehr wirksam sind, ist es ausreichend, wenn der Massenanteil an Kieselsäure an der Suspension von 0,1 bis 10 Gew.-%, bevorzugt von 0,5 bis 5 Gew.-% beträgt.

Die erfindungsgemäßen Separatorschichten werden durch Verfestigen der Suspension auf dem Substrat, also der Oberfläche der Elektrode aufgebracht, so das auf diese Weise eine Separator-Elektroden-Einheit erhalten wird. Auch dieses Prinzip ist bereits in WO 99/15262 beschrieben, jedoch werden dort Verfestigungstemperaturen von bis zu 700 °C angegeben, die in dem erfindungsgemäßen Verfahren zu einer Zerstörung der Elektrode führen würde und außerdem ein ungewünschtes verstärktes Sintern der Metalloxid-Partikeln zur Folge hätte. Die auf die Elektrode aufgebrachte Suspension wird deshalb durch Erwärmen auf 200 bis 280° C verfestigt. Das Erwärmen erfolgt von 0,5 bis 10 Minuten. Die Temperatur und Dauer der Behandlung wird durch die Temperaturbeständigkeit der in der eingesetzten Elektrode vorhandenen Materialien vorgegeben und kann vorzugsweise entsprechend anzupassen sein.

Das erfindungsgemäße Erwärmen des Verbundes kann mittels erwärmter Luft, Heißluft, Infrarotstrahlung oder durch andere Erwärmungsmethoden nach dem Stand der Technik erfolgen.

Die erfindungsgemäße Beschichtung der positiven Elektrode kann diskontinuierlich oder kontinuierlich durchgeführt werden. Vorzugsweise wird die Beschichtung, also die Herstellung der Separatorschicht so durchgeführt, dass die als Substrat eingesetzte positive Elektrode von einer Rolle abgerollt wird mit einer Geschwindigkeit von 1 m/h bis 2 m/s, vorzugsweise mit einer Geschwindigkeit von 0,5 m/min bis 20 m/min und ganz besonders bevorzugt mit einer Geschwindigkeit von 1 m/min bis 5 m/min, durch zumindest eine Apparatur durchläuft, welche die Suspension auf die Oberfläche der Elektrode aufbringt, wie z. B. eine Walze, und zumindest eine weitere Apparatur durchläuft, welche das Verfestigen der Suspension auf der Elektrodenoberfläche durch Erwärmen ermöglicht, wie z. B. ein elektrisch beheizter Ofen, und am Ende die so hergestellte Separator-Elektroden-Einheit auf einer zweiten Rolle aufgerollt wird. Auf diese Weise ist es möglich, die erfindungsgemäße Separator-Elektroden-Einheit im Durchlaufverfahren herzustellen.

Soll die Separator-Elektroden-Einheit mit einem automatischen Abschaltmechanismus ausgerüstet werden, so kann dies z. B. dadurch geschehen, dass nach dem Verfestigen der auf die Elektrode aufgebrachten Suspension eine Schicht aus Partikeln, die bei einer gewünschten Temperatur Schmelzen und die Poren der Separatorschicht verschließen, so genannte Abschaltpartikeln, zur Erzeugung eines Abschaltmechanismus auf die Separator-Elektroden-Einheit aufgebracht und fixiert wird. Die Schicht aus Abschaltpartikeln kann z. B. durch Aufbringen einer Suspension von Wachspartikeln mit einer mittleren Partikelgröße größer der mittleren Porengröße der Separatorschicht in einem Sol, Wasser, Lösemittel oder Lösemittelgemisch erzeugt werden.

Die Suspension zur Aufbringung der Partikel enthält vorzugsweise von 1 bis 50 Gew.-%, bevorzugt von 5 bis 40 Gew.-% und ganz besonders bevorzugt von 10 bis 30 Gew.-% an Wachspartikeln in der Suspension.

Da die anorganischen Separatorschicht häufig einen sehr hydrophilen Charakter haben, hat es sich als vorteilhaft erwiesen, wenn die Separator-Elektroden-Einheit unter Verwendung eines Silans in einem polymeren Sol als Haftvermittler hergestellt wurden und somit hydrophobiert wurden. Um eine gute Haftung und gleichmäßige Verteilung der Abschaltpartikel in der Abschaltschicht auch auf hydrophilen porösen anorganischen Separatorschichten zu erreichen, sind mehrere Varianten möglich.

In einer Ausführungsvariante des erfindungsgemäßen Verfahrens hat es sich als vorteilhaft erwiesen, die poröse anorganische Separatorschicht vor dem Aufbringen der Abschaltpartikel zu hydrophobieren. Die Herstellung hydrophober Membrane, die nach dem selben Prinzip funktioniert, wird beispielsweise in WO 99/62624 beschrieben. Vorzugsweise wird die poröse anorganische Separatorschicht durch Behandlung mit Alkyl-, Aryl- oder Fluoralkylsilanen, wie sie z. B. unter dem Namen Markennamen Dynasilan von der Degussa vertrieben werden, hydrophobiert. Es können dabei z. B. die bekannten Methoden der Hydrophobierung, die unter anderem für Textilien angewendet werden (D. Knittel; E. Schollmeyer; Melliand Textilber. (1998) 79(5), 362-363), unter geringfügiger Änderung der Rezepturen, auch für die porösen Separatorschichten bzw. die Separator-Elektroden-Einheit angewendet werden. Zu diesem Zweck wird die Separator-Elektroden-Einheit mit einer Lösung behandelt, die zumindest einen hydrophoben Stoff aufweist. Es kann vorteilhaft sein, wenn die Lösung als Lösemittel Wasser, welches vorzugsweise mit einer Säure, vorzugsweise Essigsäure oder Salzsäure, auf einen pH-Wert von 1 bis 3 eingestellt wurde, und/oder einen Alkohol, vorzugsweise Ethanol, aufweist. Der Anteil an mit Säure behandeltem Wasser bzw. an Alkohol am Lösemittel kann jeweils von 0 bis 100 Vol.-% betragen. Vorzugsweise beträgt der Anteil an Wasser am Lösemittel von 0 bis 60 Vol.-% und der Anteil an Alkohol von 40 bis 100 Vol.-%. In das Lösemittel werden zum Erstellen der Lösung 0,1 bis 30 Gew.-%, vorzugsweise 1 bis 10 Gew.-% eines hydrophoben Stoffes gegeben werden. Als hydrophobe Stoffe können z. B. die oben aufgeführten Silane verwendet werden. Überraschenderweise findet eine gute Hydrophobierung nicht nur mit stark hydrophoben Verbindungen, wie zum Beispiel mit dem Triethoxy(3,3,4,4,5,5,6,6,7,7,8,8-tridecafluoroctyl)silan statt, sondern eine Behandlung mit Methyltriethoxysilan oder i-Butyltriethoxysilan ist vollkommen ausreichend, um den gewünschten Effekt zu erzielen. Die Lösungen werden, zur gleichmäßigen Verteilung der hydrophoben Stoffe in der Lösung, bei Raumtemperatur gerührt und anschließend auf die Separatorenschicht der Separator-Elektroden-Einheit aufgebracht und getrocknet. Das Trocknen kann durch eine Behandlung bei Temperaturen von 25 bis 100 °C beschleunigt werden.

In einer weiteren Ausführungsvariante des erfindungsgemäßen Verfahren kann die poröse anorganische Separatorenschicht vor dem Aufbringen der Abschaltpartikel auch mit anderen Haftvermittlern behandelt werden. Die Behandlung mit einem der unten genannten Haftvermittler kann dann ebenfalls wie oben beschrieben erfolgen, d. h. dass die poröse anorganische Schicht mit einem polymeren Sol, welches ein Silan als Haftvermittler aufweist, behandelt wird.

Die Schicht aus Abschaltpartikeln wird vorzugsweise durch Aufbringen einer Suspension von Abschaltpartikeln in einem Suspensionsmittel, ausgewählt aus einem Sol, Wasser oder Lösemittel, wie z. B. Alkohol, Ether oder Ketone, oder einem Lösemittelgemisch auf die Separatorschicht und anschließendes Trocknen erzeugt. Die Partikelgröße der in der Suspension vorliegenden Abschaltpartikel ist prinzipiell beliebig. Es ist jedoch vorteilhaft, wenn in der Suspension Abschaltpartikel mit einer mittleren Partikelgröße (D_{w}) größer oder gleich, vorzugsweise größer der mittleren Porengröße der Poren der porösen anorganischen Separatorschicht (dₛ) vorliegen, da so sichergestellt wird, dass die Poren der anorganischen Schicht bei der Herstellung des erfindungsgemäßen Separators nicht durch Abschaltpartikel verstopft werden. Bevorzugt weisen die eingesetzten Abschaltpartikel eine mittlere Partikelgröße (D_{w}) auf, die größer als der mittlere Porendurchmesser (dₛ) und kleiner 5 dₛ, besonders bevorzugt kleiner 2 dₛ beträgt.

Sollte es gewünscht sein Abschaltpartikel einzusetzen, die eine Partikelgröße kleiner der Porengröße der Poren der porösen anorganischen Schicht aufweisen, so muss vermieden werden, dass die Partikel in die Poren der porösen anorganischen Separatorschicht eindringen. Gründe für den Einsatz solcher Partikel können z. B. in großen Preisunterschieden aber auch in der Verfügbarkeit solcher Partikel liegen. Eine Möglichkeit das Eindringen der Abschaltpartikel in die Poren der porösen anorganischen Schicht zu verhindern besteht darin, die Viskosität der Suspension so einzustellen, dass in Abwesenheit von äußeren Scherkräften kein Eindringen der Suspension in die Poren der anorganischen Separatorschicht erfolgt. Eine solch hohe Viskosität der Suspension kann z. B. dadurch erreicht werden, dass der Suspension Hilfsstoffe, die das Fließverhalten beeinflussen, wie z. B. Kieselsäuren (Aerosil, Degussa) hinzugefügt werden. Beim Einsatz von Hilfsstoffen wie z. B. Aerosil 200 ist häufig ein Anteil von 0,1 bis 10 Gew.-%, vorzugsweise 0,5 bis 50 Gew.-% Kieselsäure, bezogen auf die Suspension, schon ausreichend um eine genügend hohe Viskosität der Suspension zu erzielen. Der Anteil an Hilfsstoffen kann jeweils durch einfache Vorversuche ermittelt werden.

Es kann vorteilhaft sein, wenn die eingesetzte Abschaltpartikel aufweisende Suspension Haftvermittler aufweist. Eine solche Haftvermittler aufweisende Suspension kann direkt auf eine Separatorschicht aufgebracht werden, auch wenn diese nicht vor dem Aufbringen hydrophobiert wurde. Natürlich kann eine Haftvermittler aufweisende Suspension auch auf eine hydrophobierte Separatorschicht oder auf eine Separatorschicht, bei deren Herstellung ein Haftvermittler eingesetzt wurde, aufgebracht werden. Als Haftvermittler in der Abschaltpartikel aufweisenden Suspension werden vorzugsweise Silane eingesetzt, die Amino-, Vinyl- oder Methacrylseitengruppen aufweisen. Solche Haftvermittler sind z. B. AMEO (3-Aminopropyltriethoxysilan), MEMO (3-methacryloxypropyltrimethoxysilan), Silfin (Vinylsilan + Initiator + Katalysator), VTEO (Vinyltriethoxysilan) oder VTMO (Vinyltrimethoxysilan). Solche Silane sind z. B. von der Degussa auch in wässriger Lösung unter der Bezeichnung Dynasilan 2926, 2907 oder 2781 erhältlich. Ein Anteil von maximal 10 Gew.-% an Haftvermittler hat sich als ausreichend für die Sicherstellung einer genügend großen Haftung der Abschaltpartikel an der porösen anorganischen Separatorschicht herausgestellt. Vorzugsweise weisen Haftvermittler aufweisende Suspensionen von Abschaltpartikeln von 0,1 bis 10 Gew.-%, bevorzugt von 1 bis 7,5 Gew.-% und ganz besonders bevorzugt von 2,5 bis 5 Gew.-% an Haftvermittler bezogen auf die Suspension auf.

Als Abschaltpartikel können alle Partikel eingesetzt werden, die einen definierten Schmelzpunkt aufweisen. Das Material der Partikel wird dabei entsprechend der gewünschten Abschalttemperatur ausgewählt. Da bei den meisten Batterien relativ niedrige Abschalttemperaturen gewünscht werden, ist es vorteilhaft solche Abschaltpartikel einzusetzen, die ausgewählt sind aus Partikeln aus Polymeren, Polymermischungen, natürlichen und/oder künstlichen Wachsen. Besonders bevorzugt werden als Abschaltpartikel Partikel aus Polypropylen- oder Polyethylenwachs eingesetzt.

Das Aufbringen der die Abschaltpartikel aufweisenden Suspension kann durch Aufdrucken, Aufpressen, Einpressen, Aufrollen, Aufrakeln, Aufstreichen, Tauchen, Spritzen oder Aufgießen auf die poröse anorganische Separatorschicht erfolgen. Die Abschaltschicht wird vorzugsweise dadurch erhalten, dass die aufgebrachte Suspension bei einer Temperatur von Raumtemperatur bis 100 °C, vorzugsweise von 40 bis 60 °C getrocknet wird.

Es kann vorteilhaft sein, wenn die Partikel nach dem Aufbringen auf die poröse anorganische Separatorschicht durch zumindest einmaliges Erwärmen auf eine Temperatur oberhalb der Glastemperatur, so dass ein Anschmelzen der Partikel ohne Änderung der eigentlichen Form erreicht wird, fixiert werden. Auf diese Weise kann erreicht werden, dass die Abschaltpartikel besonders gut an der porösen anorganischen Separatorschicht haften.

Das Aufbringen der Suspension mit anschließendem Trocknen sowie ein eventuelles Erwärmen über die Glasübergangstemperatur kann kontinuierlich oder quasi kontinuierlich durchgeführt werden. Wird eine flexible Separator-Elektroden-Einheit als Ausgangsmaterial eingesetzt, so kann diese wiederum von einer Rolle abgewickelt, durch eine Beschichtungs-, Trocknungs- und gegebenenfalls Erwärmungsapparatur geführt und anschließend wieder aufgerollt werden.

Erfindungsgemäße Separator-Elektroden-Einheiten können in Batterien, insbesondere Lithium-Batterien verwendet werden. Die erfindungsgemäßen Separator-Elektroden-Einheiten sind für primäre und sekundäre (wiederaufladbare) Lithium-Batterien geeignet. Bei der erfindungsgemäßen Verwendung der Separator-Elektroden-Einheit in Batterien wird diese z. B. mit der Gegenelektrode verbunden und mit Elektrolyt getränkt. Durch die besonders hohe Porosität und Porengröße sowie der geringen Dicke der Separatorschicht ist die erfindungsgemäße Separator-Elektroden-Einheit insbesondere geeignet um in Lithium-Hochleistungs- und Hochenergiebatterien verwendet zu werden.

Gegenstand der vorliegenden Erfindung sind auch Lithium-Batterien selbst, wobei diese primäre und sekundäre Batterien sein können, die eine erfindungsgemäße Separator-Elektroden-Einheit aufweisen. Solche Batterien können auch Lithium-Hochleistungs- und - Hochenergiebatterien sein. Die Separatorschicht der erfindungsgemäßen Separator-Elektroden-Einheit weist bei solchen Lithium-Batterien üblicherweise als Elektrolyten Lithiumsalze mit großen Anionen in Carbonaten als Lösemittel auf. Geeignete Lithiumsalze sind z. B. LiClO₄, LiBF₄, LiAsF₆, LiCF₃SO₃ oder LiPF₆, wobei LiPF₆ besonders bevorzugt ist. Als Lösemittel geeignete organische Carbonate sind z. B. Ethylencarbonat (EC), Propylencarbonat (PC), Dimethylcarbonat (DMC), Ethylmethylcarbonat oder Diethylcarbonat oder Mischungen davon.

Ebenso gut geeignet sind die erfindungsgemäßen Separatoren für den Einsatz in Batterien, die schnell aufgeladen werden sollen. Durch die hohe Temperaturbeständigkeit des erfindungsgemäßen Separators ist eine Batterie, die mit diesem Separator ausgerüstet ist, nicht so temperaturempfindlich und kann daher den Temperaturanstieg aufgrund der schnellen Ladung ohne negative Veränderungen des Separators bzw. ohne Beschädigung der Batterie dulden. Folglich sind diese Batterien deutlich schneller aufzuladen. Dies ist ein deutlicher Vorteil beim Einsatz solcher Art ausgerüsteter Batterien in Elektrofahrzeugen, da diese nicht mehr über viele Stunden geladen werden müssen, sondern das Aufladen innerhalb von deutlich kürzeren Zeiträumen, d. h. innerhalb weniger Stunden und bevorzugt in weniger als einer Stunde, durchführbar ist.

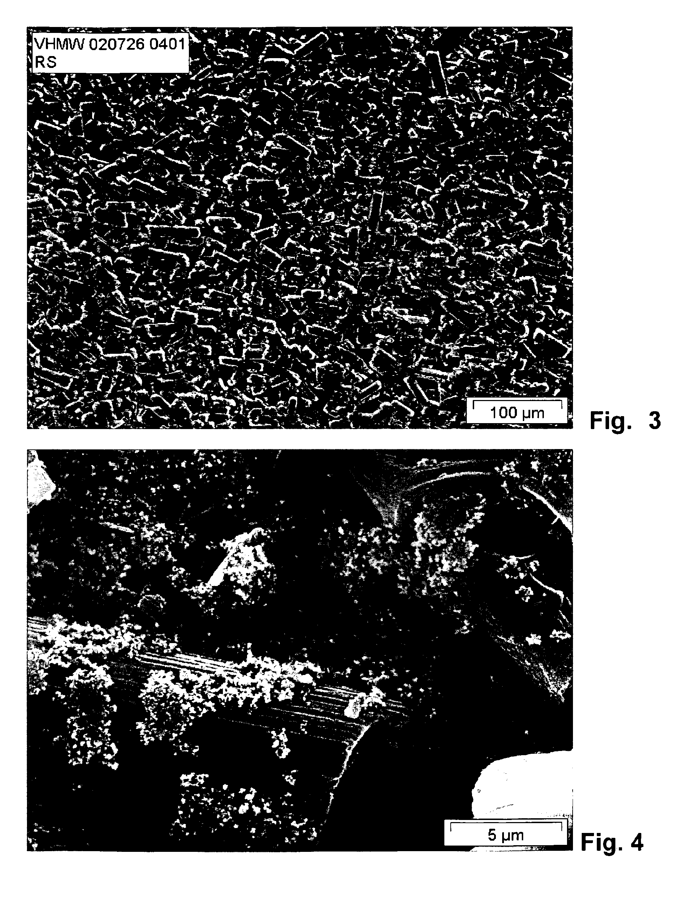

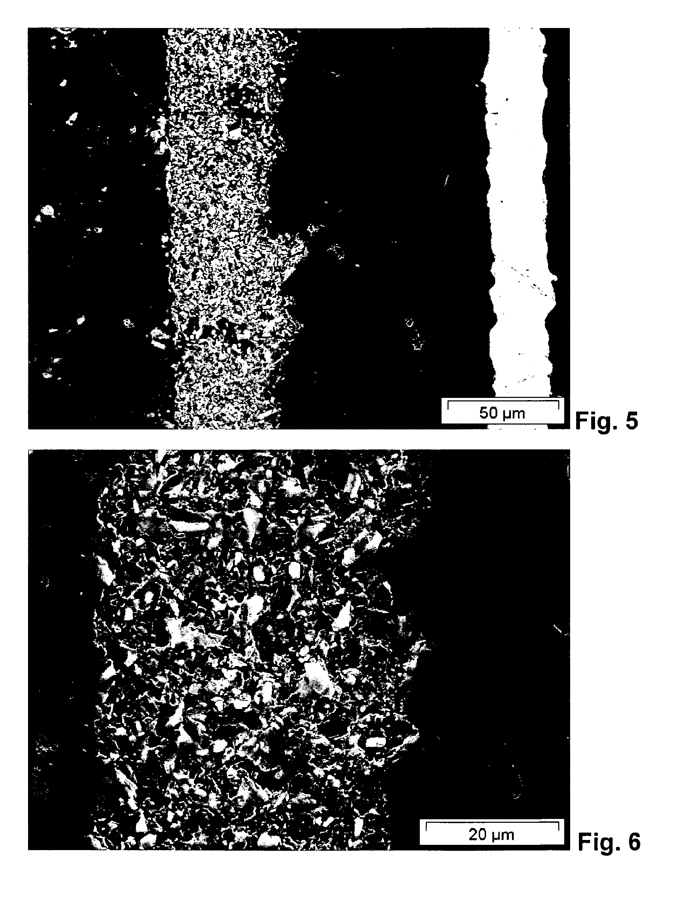

Die Erfindung wird durch die Abbildungen Fig. 1 bis Fig. 6 beschrieben, ohne dass die Erfindung auf dieses Ausführungsarten beschränkt sein soll.
Fig. 1 und Fig. 2 zeigen REM-Aufnahmen einer Kathode in unterschiedlichen Vergrößerungen.
Fig. 3 und Fig. 4 zeigen REM-Aufnahmen einer Anode in unterschiedlichen Vergrößerungen
Fig. 5 und Fig. 6 zeigen REM-Aufnahmen einer erfindungsgemäßen, nach Beispiel 2a hergestellten Separator-Elektroden(Anoden)-Einheit im Querschnitt.

Die nachfolgenden Beispiele weichen von der vorliegenden Erfindung ab.

### Vergleichsbeispiel 1:

### Herstellung eines S450PET-Separators (Vergleichsmuster nach dem Stand der Technik)

Zu 160 g Ethanol werden zunächst 15 g einer 5 Gew.-%igen, wässrigen HCl-Lösung, 10 g Tetraethoxysilan, 2,5 g Methyltriethoxysilan und 7,5 g Dynasilan GLYMO (Hersteller aller Dynasilane: Degussa AG) gegeben. In diesem Sol, das zunächst für einige Stunden gerührt wurde, werden dann jeweils 125 g der Aluminiumoxide Martoxid MZS-1 und Martoxid MZS-3 (Hersteller beider Aluminiumoxide: Martinswerke) suspendiert. Dieser Schlicker wird für mindestens weitere 24 h mit einem Magnetrührer homogenisiert, wobei das Rührgefäß abgedeckt werden muss, damit es nicht zu einem Lösemittelverlust kommt.

Ein PET-Vlies mit einer Dicke von ca. 30 µm (dünnere Vliese lassen sich mit diesen großen Partikeln nur schwer beschichten, ohne dass es zu Fehlstellen und Löchern kommt) und einem Flächengewicht von etwa 20 g/m² wird in einem kontinuierlichen Aufwalzverfahren (Bandgeschwindigkeit ca. 8 m/h, T = 200 °C) mit obigem Schlicker beschichtet. Bei diesem Aufwalzverfahren wird der Schlicker mit einer Walze, die sich gegenläufig zur Bandrichtung (Bewegungsrichtung des Vlieses) bewegt, auf das Vlies aufgewalzt. Das Vlies läuft anschließend durch einen Ofen, der die angegebene Temperatur aufweist. Man erhält am Ende einen Separator mit einer mittleren Porenweite von 450 nm, einer Dicke von ca. 50 µm und einem Gewicht von ca. 50 g/m².

### Vergleichsbeispiel 2:

### Li-Ionen-Batterie mit hybridem keramischen Separator nach dem Stand der Technik

Ein gemäß Vergleichsbeispiel 1 hergestellter S450PET-Separator wird in eine Li-Ionen-Zelle, bestehend aus einer Positiv-Masse aus LiCoO₂, einer Negativ-Masse bestehend aus Graphit und einem Elektrolyten aus 1M-LiPF₆ in Ethylencarbonat/Dimethylcarbonat, eingebaut [Li-CoO₂ // S-450-PET, EC/DMC 1:1, 1M LiPF₆ // Graphit]. Die Batterie läuft stabil über mehrere hundert Zyklen. Aufgrund des recht großen Innenwiderstandes im Separator kann nur etwa 90 % der Kapazität der Zelle mit konstant Strom geladen werden.

### Beispiel 1a:

### Beschichtung einer positiven Elektrode (Kathode) mit einer keramischen Separatorschicht

200 g Al₂O₃ (AlCoA, CT3000 SG) werden in 160 g Ethanol dispergiert. Zu dieser Lösung gibt man 10 g Tetraethoxysilan (Dynasilan A, Degussa AG), 10 g Methyltriethoxysilan (Dynasilan MTES, Degussa AG) und 10 g Degussa-Silan GLYMO (ebenfalls Degussa AG) sowie 15 g 5%ige HNO₃. Die Mischung wird über Nacht gerührt, um eine gute Dispergierung des Al₂O₃-Pulver zu erhalten.

In einem diskontinuierlichen Aufrakelprozess (Rakelspalt: 50 µm, Vortrieb: 0,5 m/min) wird damit eine doppelt beschichtete LiCoO₂-Elektrode auf einem Aluminium-Stromsammler zunächst von einer Seite beschichtet und dann bei 150 °C für 30 min getrocknet. Das Auftragsgewicht beträgt ca. 115 g/m², die Separatorschichtdicke ca. 50 µm.

### Beispiel 1b:

### Beschichtung einer positiven Elektrode (Kathode) mit einer keramischen Separatorschicht

75 g Al₂O₃ (AlCoA, CT3000 SG) werden in 160 g Ethanol dispergiert. Zu dieser Lösung gibt man 10 g Tetraethoxysilan (Dynasilan A, Degussa AG) und 10 g Triethoxy(tridecafluoroctyl)silan (ebenfalls Degussa AG) sowie 15 g 5 % HNO₃. Die Mischung wird über Nacht gerührt, um eine gute Dispergierung des Al₂O₃-Pulver zu erhalten.

In einem diskontinuierlichen Aufrakelprozess (Rakelspalt: 50 µm, Vortrieb: 0,5 m/min) wird damit eine doppelt beschichtete LiCoO₂-Elektrode auf einem Aluminium-Stromsammler zunächst von einer Seite beschichtet und dann bei 150 °C für 30 min getrocknet. Aufgrund des besseren Hafteigenschaften des Triethoxy(tridecafluoroctyl)silan haftet die keramische Separatorschicht deutlich besser auf der Elektrode als in Beispiel 1a. Das Auftragsgewicht beträgt jetzt ca. 45 g/m², die Separatorschichtdicke nur noch knapp 20 µm.

### Beispiel 2a:

### Beschichtung einer negativen Elektrode (Anode) mit einer keramischen Separatorschicht

Je 125 g Al₂O₃ MZS-1 und MZS-3 (beide Martinswerke) werden in 160 g Ethanol dispergiert. Zu dieser Lösung gibt man 10 g Tetraethoxysilan (Dynasilan A, Degussa AG), 10 g Methyltriethoxysilan (Dynasilan MTES, Degussa AG) und 10 g Degussa-Silan GLYMO (ebenfalls Degussa AG) sowie 15 g 5 % HNO₃. Die Mischung wird über Nacht gerührt, um eine gute Dispergierung des Al₂O₃-Pulver zu erhalten.

In einem kontinuierlichen Aufwalzprozess (Vortrieb: 8 m/h) wird damit eine doppelt beschichtete Graphit-Elektrode auf einem Kupfer-Stromsammler zunächst von einer Seite beschichtet und dann bei 150 °C für 30 min getrocknet. Bild 3 zeigt die beschichtete Elektrode. Das Auftragsgewicht beträgt ca. 115 g/m², die Separatorschichtdicke ca. 45 µm.

### Beispiel 2b:

### Beschichtung einer negativen Elektrode (Anode) mit einer keramischen Separatorschicht

Je 45 g Al₂O₃ MZS-1 und MZS-3 (beide Martinswerke) werden in 160 g Ethanol dispergiert. Zu dieser Lösung gibt man 10 g Tetraethoxysilan (Dynasilan A, Degussa AG), 10 g Methytriethoxysilan (Dynasilan MTES, Degussa AG) und 10 g Degussa-Silan GLYMO (ebenfalls Degussa AG) sowie 15 g 5 % HNO₃. Die Mischung wird über Nacht gerührt, um eine gute Dispergierung des Al₂O₃-Pulver zu erhalten.

In einem kontinuierlichen Aufwalzprozess wie in Vergleichsbeispiel 1 beschrieben (Vortrieb: 8 m/h) wird mit diesem Schlicker eine doppelt beschichtete Graphit-Elektrode auf einem Kupfer-Stromsammler zunächst von einer Seite beschichtet und dann bei 150 °C getrocknet. Das Auftragsgewicht beträgt jetzt ca. 45 g/m², die Separatorschichtdicke nur noch ca. 20 µm.

### Beispiel 3:

### Li-Batterie, die eine Separator-Elektroden-Einheit enthält

Aus der Separator-Kathoden-Einheit von Beispiel 1b und der Separator-Anoden-Einheit aus Beispiel 2b wird eine Batteriezelle durch laminieren der Separator-Elektroden-Einheiten gebaut. Die Batterie wird mit einem Elektrolyten aus 1M-LiPF₆ in Ethylencarbonat/Dimethylcarbonat getränkt. Die Batterie läuft stabil über mehrere hundert Zyklen. Aufgrund des deutlich geringen Innenwiderstandes im Separator kann nahezu die gesamte Kapazität der Zelle mit konstant Strom geladen werden. Aufgrund der dünnen Separatorschicht und des geringeren Flächengewichts liegen außerdem sowohl die massen- als auch die volumenbezogene spezifische Energiedichte deutlich höher.

## Patentansprüche

1. Separator-Elektroden-Einheit, umfassend eine poröse, als Elektrode in einer Lithium-Batterie geeignete Elektrode und einer auf dieser Elektrode aufgebrachten Separatorschicht,
**dadurch gekennzeichnet,**
**dass** die Separator-Elektroden-Einheit eine anorganische Separatorschicht aufweist,
die zumindest zwei Fraktionen von Metalloxidpartikeln aufweist,
die sich in ihrer mittleren Partikelgröße oder in dem Metall und in ihrer mittleren Partikelgröße voneinander unterscheiden, wobei
die Separatorschicht Metalloxid-Partikel mit einer mittleren Partikelgröße (D_{g}) größer als die mittlere Porengröße (d) der Poren der porösen Elektrode aufweist,
ausgewählt aus Al₂O₃- und/oder ZrO₂-Partikeln,
die durch Metalloxid-Partikel, die eine Partikelgröße (Dₖ) kleiner als
die Poren der porösen positiven Elektrode aufweisen, verklebt sind,
erhalten durch Erwärmen für 0,5 bis 10 Minuten bei einer Temperatur von 200 bis 280° C,
hergestellt aus Suspensionen aus polymeren Solen,
wobei zur Anpassung des Benetzungsverhaltens
diese Sole Mischungen, die einen oder mehrere Alkohole und aliphatische Kohlenwasserstoffe aufweisen,
umfassen.

2. Separator-Elektroden-Einheit gemäß Anspruch 1,
**dadurch gekennzeichnet,**
**dass** die Separatorschicht eine Dicke (z) von kleiner 100 D_{g} und größer gleich 1,5 D_{g} aufweist.

3. Separator-Elektroden-Einheit gemäß einem der Ansprüche 1 oder 2,
**dadurch gekennzeichnet,**
**dass** die Separatorschicht eine Dicke (z) von kleiner 20 D_{g} und größer gleich 5 D_{g} aufweist.

4. Separator-Elektroden-Einheit gemäß zumindest einem der Ansprüche 1 bis 3,
**dadurch gekennzeichnet,**
**dass** die Metalloxid-Partikel mit einer mittleren Partikelgröße (Dₖ) kleiner als die mittlere Porengröße (d) der Poren der porösen positiven Elektrode SiO₂- und/oder ZrO₂ -Partikel sind.

5. Separator-Elektroden-Einheit nach zumindest einem der Ansprüche 1 bis 4,
**dadurch gekennzeichnet,**
**dass** die Metalloxid-Partikel mit einer mittleren Partikelgröße (D_{g}) größer als die mittlere Porengröße (d) der Poren der porösen positiven Elektrode eine mittlere Partikelgröße (D_{g}) von kleiner 10 µm aufweisen.

6. Separator-Elektroden-Einheit gemäß zumindest einem der Ansprüche 1 bis 5,
**dadurch gekennzeichnet,**
**dass** die Separatorschicht eine Porosität von 30 bis 70 % aufweist.

7. Separator-Elektroden-Einheit gemäß zumindest einem der Ansprüche 1 bis 6,
**dadurch gekennzeichnet,**
**dass** die Einheit ohne Beschädigung bis auf einen Radius bis herab zu 50 cm biegbar ist.

8. Separator-Elektroden-Einheit gemäß zumindest einem der Ansprüche 1 bis 7,
**dadurch gekennzeichnet,**
**dass** die Elektrode eine als positive (Kathode) oder negative (Anode) Elektrode geeignete Elektrode ist.

9. Verfahren zur Herstellung einer Separator-Elektroden-Einheit gemäß zumindest einem der Ansprüche 1 bis 8,
**dadurch gekennzeichnet,**
**dass** auf einer porösen, als positive (Kathode) oder negative (Anode) Elektrode in einer Lithium-Batterie geeigneten Elektrode als Substrat eine poröse anorganische Beschichtung als Separatorschicht, durch Aufbringen einer Suspension, die Metalloxid-Partikel in einem Sol aufweist, und Verfestigen der anorganischen Separatorschicht auf der Elektrode durch zumindest eine thermische Behandlung, erzeugt wird, wobei die Suspension Metalloxid-Partikel mit einer mittleren Partikelgröße (D_{g}) größer als die mittlere Porengröße (d) der Poren der porösen positiven Elektrode aufweist,
und ausgewählt aus Al₂O₃- und/oder ZrO₂-Partikeln, und wobei
das Sol Metalloxid-Partikel, die
eine Partikelgröße (Dₖ) kleiner als die Poren der porösen positiven Elektrode aufweisen, enthält, wobei
die thermische Behandlung für 0,5 bis 10 Minuten bei einer Temperatur von 200 bis 280° C durchgeführt wird, und wobei
die Suspension hergestellt wird aus polymeren Solen, wobei
zur Anpassung des Benetzungsverhaltens diese Sole Mischungen,
die einen oder mehrere Alkohole und aliphatische Kohlenwasserstoffe aufweisen,
umfassen.

10. Verfahren nach Anspruch 9,
**dadurch gekennzeichnet,**
**dass** die als Metalloxid-Partikel eingesetzten Partikel eine mittlere Partikelgröße von kleiner 3 µm aufweisen.

11. Verfahren nach einem der Ansprüche 9 bis 10,
**dadurch gekennzeichnet,**
**dass** die Suspension durch Aufdrucken, Aufpressen, Einpressen, Aufrollen, Aufrakeln, Aufstreichen, Tauchen, Spritzen oder Aufgießen auf das Substrat aufgebracht wird.

12. Verfahren nach zumindest einem der Ansprüche 9 bis 11,
**dadurch gekennzeichnet,**
**dass** eine Suspension eingesetzt wird, bei der das Gewichtsverhältnis von Metalloxidpartikeln zu Sol von 1 zu 1000 bis 2 zu 1 beträgt.

13. Verfahren nach zumindest einem der Ansprüche 9 bis 12,
**dadurch gekennzeichnet,**
**dass** die Suspension zumindest ein Sol der Elemente Al, Zr oder Si oder eine Mischung dieser Sole aufweist, und durch Suspendieren der Metalloxid-Partikel in zumindest einem dieser Sole hergestellt wird.

14. Verfahren nach Anspruch 13,
**dadurch gekennzeichnet,**
**dass** die Sole durch Hydrolisieren zumindest einer Alkoholatverbindung der Elemente Al, Zr oder Si mit Wasser oder einer Säure oder eine Kombination dieser Verbindungen erhalten werden.

15. Verfahren nach zumindest einem der Ansprüche 9 bis 14,
**dadurch gekennzeichnet,**
**dass** der Suspension zur Einstellung der Viskosität der Suspension pyrogene Kieselsäure zugegeben wird.

16. Verfahren nach Anspruch 15,
**dadurch gekennzeichnet,**
**dass** der Massenanteil an Kieselsäure an der Suspension von 0,1 bis 10 Gew.-% beträgt.

17. Verwendung einer Separator-Elektroden-Einheit gemäß zumindest einem der Ansprüche 1 bis 8 in Lithium-Batterien.

18. Batterie, eine Separator-Elektroden-Einheit gemäß zumindest einem der Ansprüche 1 bis 8 aufweisend.

## Claims

1. Separator-electrode unit comprising a porous electrode useful as an electrode in a lithium battery and a separator layer applied to this electrode, **characterized in that** the separator-electrode unit comprises an inorganic separator layer which comprises at least two fractions of metal oxide particles which differ from each other in their average particle size or in the metal and in their average particle size, wherein the separator layer comprises metal oxide particles having an average particle size (D_{g}) which is greater than the average pore size (d) of the pores of the porous electrode, selected from Al₂O₃ and/or ZrO₂ particles, that are adhered together by metal oxide particles having a particle size (Dₖ) which is smaller than the pores of the porous positive electrode, obtained by heating at a temperature of from 200 to 280°C for from 0.5 to 10 minutes, produced from suspensions of polymeric sols, wherein in order to adapt the wetting behaviour these sols comprise mixtures comprising one or more alcohols and aliphatic hydrocarbons.

2. Separator-electrode unit according to Claim 1, **characterized in that** the separator layer has a thickness (z) which is less than 100 D_{g} and not less than 1.5 D_{g}.

3. Separator-electrode unit according to either of Claims 1 and 2, **characterized in that** the separator layer has a thickness (z) which is less than 20 D_{g} and not less than 5 D_{g}.

4. Separator-electrode unit according to at least one of Claims 1 to 3, **characterized in that** the metal oxide particles having an average particle size (Dₖ) which is smaller than the average pore size (d) of the pores of the porous positive electrode are SiO₂ and/or ZrO₂ particles.

5. Separator-electrode unit according to at least one of Claims 1 to 4, **characterized in that** the metal oxide particles having an average particle size (D_{g}) which is greater than the average pore size (d) of the pores of the porous positive electrode have an average particle size (D_{g}) of less than 10 µm.

6. Separator-electrode unit according to at least one of Claims 1 to 5, **characterized in that** the separator layer has a porosity of from 30 to 70%.

7. Separator-electrode unit according to at least one of Claims 1 to 6, **characterized in that** the unit is bendable down to a radius of 50 cm without damage.

8. Separator-electrode unit according to at least one of Claims 1 to 7, **characterized in that** the electrode is an electrode which is useful as a positive electrode (cathode) or as a negative electrode (anode).

9. Process for producing a separator-electrode unit according to at least one of Claims 1 to 8, **characterized in that** it comprises forming a porous inorganic coating separator layer on a porous electrode substrate useful as a positive (cathode) or negative (anode) electrode in a lithium battery by applying a suspension which comprises metal oxide particles in a sol and solidifying the inorganic separator layer on the electrode by at least one thermal treatment, wherein the suspension comprises metal oxide particles having an average particle size (D_{g}) which is greater than the average pore size (d) of the pores of the porous positive electrode, and selected Al₂Ol₃ and/or ZrO₂ particles, and the sol contains metal oxide particles which have a particle size (Dₖ) which is smaller than the pores of the porous positive electrode, the thermal treatment is carried out at a temperature of from 200 to 280°C for from 0.5 to 10 minutes, and the suspension is produced from polymeric sols, wherein in order to adapt the wetting behaviour these sols comprise mixtures comprising one or more alcohols and aliphatic hydrocarbons.

10. Process according to Claim 9, **characterized in that** the particles used as metal oxide particles have an average particle size of less than 3 µm.

11. Process according to either of Claims 9 and 10, **characterized in that** the suspension is applied to the substrate by printing on, pressing on, pressing in, rolling on, knifecoating on, brushing on, dipping, spraying or pouring on.

12. Process according to at least one of Claims 9 to 11, **characterized in that** the suspension used has a weight ratio of metal oxide particles to sol in the range from 1:1000 to 2:1.

13. Process according to at least one of Claims 9 to 12, **characterized in that** the suspension comprises at least one sol of the elements Al, Zr or Si or a mixture of these sols and is produced by suspending the metal oxide particles in at least one of these sols.

14. Process according to Claim 13, **characterized in that** the sols are obtained by hydrolyzing at least one alkoxide compound of the elements Al, Zr or Si with water or an acid or a combination of these compounds.

15. Process according to at least one of Claims 9 to 14, **characterized in that** the suspension has fumed silica added to it to adjust the viscosity of the suspension.

16. Process according to Claim 15, **characterized in that** the silica mass fraction of the suspension is in the range from 0.1 to 10% by weight.

17. Use of a separator-electrode unit according to at least one of Claims 1 to 8 in lithium batteries.

18. Battery comprising a separator-electrode unit according to at least one of Claims 1 to 8.

## Revendications

1. Unité séparateur-électrodes, comprenant une électrode poreuse, appropriée comme électrode dans une batterie au lithium, et une couche de séparateur appliquée sur cette électrode,
**caractérisée en ce que**
l'unité séparateur-électrodes présente une couche de séparateur anorganique, qui présente au moins deux fractions de particules d'oxyde métallique, qui se différencient les unes des autres en ce qui concerne leur taille de particule moyenne ou leur métal et leur taille de particule moyenne, la couche de séparateur présentant des particules d'oxyde métallique avec une taille de particule moyenne (D_{g}) plus grande que la taille de pore moyenne (d) des pores de l'électrode poreuse, sélectionnées parmi des particules Al₂O₃ et/ou ZrO₂, qui sont collées par des particules d'oxyde métallique, lesquelles présentent une taille de particule (Dₖ) plus petite que les pores de l'électrode poreuse positive, obtenues par chauffage pendant 0,5 à 10 minutes à une température de 200 à 280°C, produites à partir de suspensions de saumures polymères, ces saumures comprennent des mélanges, afin d'adapter le procédé de mouillage, lesquels présentent un ou plusieurs alcools et hydrocarbures aliphatiques.

2. Unité séparateur-électrodes selon la revendication 1,
**caractérisée en ce que**
la couche de séparateur présente une épaisseur (z) inférieure à 100 D_{g} et supérieure ou égale à 1,5 D_{g}.

3. Unité séparateur-électrodes selon une des revendications 1 ou 2,
**caractérisée en ce que**
la couche de séparateur présente une épaisseur (z) inférieure à 20 D_{g} et supérieure ou égale à 5 D_{g}.

4. Unité séparateur-électrodes selon au moins une des revendications 1 à 3,
**caractérisée en ce que**
les particules d'oxyde métallique sont des particules SiO₂ et/ou ZrO₂ avec une taille de particules moyenne (Dₖ) plus petite que la taille de pore moyenne (d) des pores de l'électrode poreuse positive.

5. Unité séparateur-électrodes selon au moins une des revendications 1 à 4,
**caractérisée en ce que**
les particules d'oxyde métallique présentent une taille de particules moyenne (D_{g}) inférieure à 10 µm avec une taille de particule moyenne (D_{g}) plus grande que la taille de pore moyenne (d) des pores de l'électrode poreuse positive.

6. Unité séparateur-électrodes selon au moins une des revendications 1 à 5,
**caractérisée en ce que**
la couche de séparateur présente une viscosité de 30 à 70%.

7. Unité séparateur-électrodes selon au moins une des revendications 1 à 6,
**caractérisée en ce que**
l'unité peut être pliée sans détérioration à un rayon allant jusqu'à 50 cm vers le bas.

8. Unité séparateur-électrodes selon au moins une des revendications 1 à 7,
**caractérisée en ce que**
l'électrode est une électrode appropriée comme électrode positive (cathode) ou négative (anode).

9. Procédé de fabrication d'une unité séparateur-électrodes selon au moins une des revendications 1 à 8,
**caractérisé en ce que**
sur une électrode poreuse, appropriée comme électrode positive (cathode) ou négative (anode) dans une batterie au lithium faisant office de substrat, un revêtement anorganique poreux faisant office de couche de séparateur est produit en appliquant une suspension, qui présente les particules d'oxyde métallique dans une saumure, et en fixant la couche de séparateur anorganique sur l'électrode par au moins un traitement thermique, la suspension présentant des particules d'oxyde métallique avec une taille de particule moyenne (D_{g}) plus grande que la taille de pore moyenne (d) des pores de l'électrode poreuse positive, et sélectionnées parmi des particules Al₂O₃ et/ou ZrO₂, et la saumure contenant des particules d'oxyde métallique, qui présentent une taille de particule (Dₖ) plus petite que les pores de l'électrode poreuse positive, le traitement thermique étant effectué pendant 0,5 à 10 minutes à une température de 200 à 280°C, et la suspension étant fabriquée à partir de saumure polymère, ces saumures contenant des mélanges, afin d'adapter le procédé de mouillage, lesquels présentent un ou plusieurs alcools et des hydrocarbures aliphatiques.

10. Procédé selon la revendication 9,
**caractérisé en ce que**
les particules employées comme particules d'oxyde métallique présentent une taille de particule moyenne inférieure à 3 µm.

11. Procédé selon une des revendications 9 à 10,
**caractérisé en ce que**
la suspension est appliquée sur le substrat par impression, compression, enfoncement, enroulage, raclage, étalement, immersion, injection ou versement.

12. Procédé selon au moins une des revendications 9 à 11,
**caractérisé en ce que**
une suspension est employée, dans laquelle le rapport en poids des particules d'oxyde métallique par rapport à la saumure s'élève de 1 à 1000 jusqu'à 2 à 1.

13. Procédé selon au moins une des revendications 9 à 12,
**caractérisé en ce que**
la suspension présente au moins une saumure des éléments Al, Zr ou Si ou un mélange de ces saumures, et est produite par suspension des particules d'oxyde métallique dans au moins une de ces saumures.

14. Procédé selon la revendication 13,
**caractérisé en ce que**
les saumures sont obtenues par hydrolyse d'au moins une liaison d'alcoolat des éléments Al, Zr ou Si avec de l'eau ou un acide ou une combinaison de ces liaisons.

15. Procédé selon au moins une des revendications 9 à 14,
**caractérisé en ce que**
des acides siliciques pyrogènes sont ajoutés à la suspension afin d'ajuster la viscosité de la suspension.

16. Procédé selon la revendication 15,
**caractérisé en ce que**
le pourcentage en masse des acides siliciques dans la suspension s'élève de 0,1 à 10% en poids.

17. Utilisation d'une unité séparateur-électrodes selon au moins une des revendications 1 à 8 dans des batteries au lithium.

18. Batterie, présentant une unité séparateur-électrodes selon au moins une des revendications 1 à 8.
